(19) Europäisches Patentamt
European Patent Office
Office européen des brevets

(11) Veröffentlichungsnummer: **0 005 441**
**B1**

(12) # EUROPÄISCHE PATENTSCHRIFT

(45) Veröffentlichungstag der Patentschrift: **19.05.82**

(51) Int. Cl.³: **C 07 F 9/48**, C 07 F 9/65, C 08 K 5/53

(21) Anmeldenummer: **79101033.3**

(22) Anmeldetag: **05.04.79**

(54) **Aminodibenzoxaphosphorine, Verfahren zu ihrer Herstellung und ihre Verwendung als Stabilisatoren.**

(30) Priorität: **14.04.78 CH 4026/78**

(43) Veröffentlichungstag der Anmeldung:
**28.11.79 Patentblatt 79/24**

(45) Bekanntmachung des Hinweises auf die Patenterteilung:
**19.05.82 Patentblatt 82/20**

(84) Benannte Vertragsstaaten:
**BE CH DE FR GB IT NL**

(56) Entgegenhaltungen:
**EP - A - 0 000 352**
**GB - A - 1 256 180**

(73) Patentinhaber: **CIBA-GEIGY AG**
**Patentabteilung Postfach**
**CH-4002 Basel (CH)**

(72) Erfinder: **Rasberger, Michael, Dr.**
**Waltersgrabenweg 6**
**CH-4125 Riehen (CH)**
Erfinder: **Evans, Samuel, Dr.**
**Schützenrain 3**
**CH-4125 Riehen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 005 441 B1

Aminodibenzoxaphosphorine, Verfahren zu ihrer Herstellung und ihre Verwendung als Stabilisatoren

Die vorliegende Erfindung betrifft neue N-substituierte 6-Amino-dibenz[c,e][1,2]oxaphosphorine, deren Herstellung, deren Verwendung als Stabilisatoren für organisches Material, sowie das mit deren Hilfe stabilisierte organische Material.

Phosphonite sind als Stabilisatoren bekannt, insbesondere das 6-Phenoxy-dibenz[c,e][1,2]oxaphosphorin welches in dem GB-Pat. Nr. 1,256,180 beschrieben ist. Obwohl nicht spezifisch genannt, kann der gleichen Publikation entnommen werden, dass das 6-Amino-dibenz[c,e][1,2]oxaphosphorin sich auch als Stabilisator eignen könnte. Diese Phosphonite genügen jedoch nicht den hohen Anforderungen, denen ein Stabilisator genügen soll, insbesondere hinsichtlich Lagerstabilität, Wasseraufnahme, Hydrolyseempfindlichkeit, Verarbeitungsstabilisierung, Farbverhalten, Flüchtigkeit, Migrationsverhalten, Verträglichkeit und Lichtschutzverbesserung.

Aufgabe der Erfindung war es, Stabilisatoren bereitzustellen, die diese Nachteile nicht oder in geringerem Mass aufweisen.

Die vorliegende Erfindung betrifft N-substituierte 6-Amino-dibenz[c,e][1,2]oxaphosphorin der Formel (I)

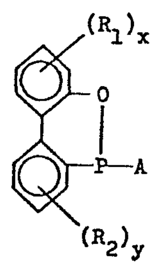

(I),

worin

$R_1$ und $R_2$ unabhängig voneinander unsubstituierte oder substituierte Kohlenwasserstoffreste oder Halogen sind

x und y unabhängig voneinander 0, 1, 2 oder 3 sind, und

A eine durch aliphatische, alicyclische, aromatische oder araliphatische Reste substituierte Aminogruppe, eine heterocyclische Aminogruppe oder ein hydrazinderivat bedeutet.

$R_1$ und $R_2$ sind als unsubstituierte oder substituierte Kohlenwasserstoffreste insbesondere solche mit 1—8 C-Atomen, wie geradkettiges oder verzweigtes Alkyl mit 1—8 C-Atomen, z.B. Methyl, Aethyl, iso-Propyl, t.-Butyl oder 1,1,3,3-Tetramethylbutyl und als Halogen insbesondere Chlor.

x bedeutet 0, 1, 2 oder 3, bevorzugt 0, 1 oder 2 und insbesondere 0.

y bedeutet 0, 1, 2 oder 3, bevorzugt 0.

Bevorzugt werden Verbindungen, in welchen alle im Molekül vorkommenden primären oder sekundären Aminstickstoffe mit einer Gruppe der Formel II substituiert sind:

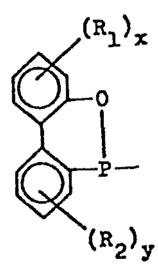

(II)

In der Formel II besitzen die Symbole $R_1$, $R_2$, x und y die oben angegebene Bedeutung.

Bevorzugt werden Amine A der Formel III

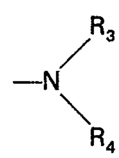

(III),

worin

$R_3$ Wasserstoff, $C_1$—$C_{22}$ Alkyl, $C_2$—$C_{21}$ Oxa- oder Thia-alkyl, $C_3$—$C_{18}$ Alkenyl, $C_3$—$C_{118}$ Alkinyl, $C_2$—$C_6$ Hydroxyalkyl, $C_3$—$C_{24}$ Alkoxycarbonylalkyl, $C_5$—$C_{12}$ Cycloalkyl, $C_6$—$C_{14}$ Aryl, $C_7$—$C_{15}$ Alkaryl, $C_7$—$C_{15}$ Aralkyl, eine unsubstituierte oder substituierte $C_5$—$C_{17}$ Piperidin-4-ylgruppe oder eine Gruppe der Formel II bedeutet, worin $R_1$, $R_2$, x und y die oben angegebene Bedeutung haben, und

$R_4$ $C_1$—$C_{22}$ Alkyl, $C_2$—$C_{21}$ Oxa- oder Thiaalkyl, $C_3$—$C_{18}$ Alkenyl, $C_3$—$C_{18}$ Alkinyl, $C_2$—$C_6$

Hydroxyalkyl, $C_3$—$C_{24}$ Alkoxycarbonylalkyl, $C_5$—$C_{12}$ Cycloalkyl, $C_6$—$C_{14}$ Aryl, $C_7$—$C_{15}$ Alkaryl, $C_7$—$C_{15}$ Aralkyl, eine unsubstituierte oder substituierte $C_5$—$C_{17}$ Piperidin-4-ylgruppe, eine Gruppen der Formel IV

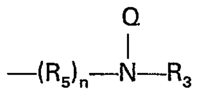

(IV) oder

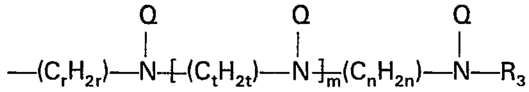

(V),

worin

$R_3$ die oben angegebene Bedeutung hat, und

n 0 oder 1 ist, und

$R_5$ gegebenenfalls mit einem oder zwei Sauerstoff- oder Schwefelatomen unterbrochenes $C_2$—$C_{22}$-Alkylen, $C_4$—$C_{22}$ Alkenylen, $C_4$—$C_{22}$ Alkinylen, $C_5$—$C_9$ Cycloalkylen, oder eine Gruppe der Formel VI

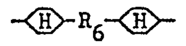

ist, worin $R_6$ —O—, —S— oder —$(R_7)C(R_8)$— ist, wobei $R_7$ und $R_8$ unabhängig voneinander Wasserstoff oder $C_1$—$C_8$ Alkyl sind oder $R_7$ und $R_8$ zusammen mit dem C-Atom, an das sie gebunden sind, $C_5$—$C_{12}$ Cycloalkyl ergeben, oder $R_7$ und $R_8$ bedeuten zusammen 1,4-Cyclohexylendimethylen oder 1,3,3-Trimethyl-cyclohexylen-1,5 und worin $R_5$ ferner Phenylen, Biphenylen oder eine Gruppe der Formel

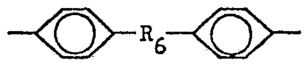

bedeutet, wobei $R_6$ die oben angegebene Bedeutung hat, und

r, t und n unabhängig voneinander 2, 3, 4, 5 oder 6 sind, und

m 0, 1, 2 oder 3 ist, und

Q eine Gruppe der Formel II bedeutet, worin $R_1$, $R_2$, x und y die oben angegebene Bedeutung haben, oder

$R_3$ und $R_4$ ferner zusammen mit dem N-Atom, an das sie gebunden sind, substituiertes Pyrrolidin, Oxazolidin, Piperidin oder Morpholin bedeutet, oder $R_3$ und $R_4$ zusammen den Rest

$$—CH_2—CH_2—N(Q)—CH_2—CH_2—$$

bilden, worin Q die oben angegebene Bedeutung hat.

Bedeuten $R_3$ und $R_4$ $C_1$—$C_{22}$ Alkyl, so kann es sich um Methyl, Aethyl, n-Propyl, Isopropyl, n-Butyl, sec.Butyl, tert.Butyl, n-Pentyl, n-Hexyl, Isohexyl, N-Octyl, 1,1,3,3-Tetramethylbutyl, n-Nonyl, Decyl, Dodecyl, Tetradecyl, Hexadecyl, Octadecyl, Eicosyl oder Docosyl handeln. Bevorzugt besitzen $R_3$ und $R_4$ als Alkylgruppen 1—18 C-Atomen, und $R_3$ insbesondere 1—12 C-Atome und $R_4$ insbesondere 1—4 C-Atome. $R_3$ und $R_4$ sind als $C_2$—$C_{21}$, insbesondere $C_4$—$C_{21}$ Oxa- oder Thiaalkyl bevorzugt Alkoxy- oder Alkylthiopropyl, wie Butoxypropyl, Dodecylthiopropyl, Octyloxypropyl oder Octadecyloxypropyl.

$R_3$ und $R_4$ sind als $C_3$—$C_{18}$ Alkenyl beispielsweise Allyl, Methallyl, n-Hex-3-enyl, n-Octyl-4-enyl oder n-Undec-10-enyl. Bevorzugt sind Allyl und Methallyl, und insbesondere Allyl.

$R_3$ und $R_4$ sind als $C_3$—$C_{18}$ Alkinyl z.B. Propargyl, n-But-1-inyl, n-But-2-inyl oder n-Hex-1-inyl. Bevorzugt sind Alkinylgruppen mit 3 oder 4 C-Atomen und insbesondere Propargyl.

Bedeuten $R_3$ und $R_4$ Hydroxyalkyl mit 1—6 C-Atomen, so kann es sich dabei um 2-Hydroxypropyl, 2-Hydroxyäthyl, 3-Hydroxypropyl, 4-Hydroxybutyl oder 6-Hydroxyhexyl handeln.

Sind $R_3$ und $R_4$ $C_3$—$C_{24}$ Alkoxycarbonylalkyl bevorzugt $C_3$—$C_{24}$ Alkoxycarbonylmethyl oder -äthyl und insbesondere $C_3$—$C_{14}$ Alkoxycarbonylmethyl oder $C_3$—$C_{15}$ Alkoxycarbonyläthyl, so kann es sich dabei beispielsweise um Methoxycarbonylmethyl, Aethoxymethyl, Methoxycarbonyläthyl, Octoxycarbonylmethyl, Octoxycarbonylbutyl, Dodecyloxycarbonyläthyl oder Octadecyloxycarbonyläthyl handeln.

$R_3$ und $R_4$ sind als $C_5$—$C_{12}$, bevorzugt $C_5$—$C_8$ und insbesondere $C_6$ Cycloalkyl beispielsweise Cyclopentyl, Cyclohexyl, Cycloheptyl, Cyclooctyl, Cyclononyl oder Cyclododecyl.

$R_3$ und $R_4$ sind als $C_6$—$C_{14}$ Aryl z.B. Phenyl, α-Napthyl, β-Naphthyl oder Phenanthryl. Bevorzugt werden Phenylgruppen.

Bedeuten $R_3$ und $R_4$ Aralkyl mit $C_7$—$C_{15}$ C-Atomen, so handelt es sich z.B. um Benzyl, α-Phenyläthyl, α,α-Dimethylbenzyl oder um 2-Phenyläthyl, bevorzugt um Benzyl.

$R_3$ und $R_4$ können als $C_7$—$C_{15}$ Alkarylgruppen beispielsweise Tolyl, 2,6-Dimethylphenyl, 2,6-Diäthylphenyl, 2,4,6-Triisopropylphenyl oder 4-t.Butylphenyl sein.

Sind $R_3$ und $R_4$ $C_5$—$C_{17}$ Piperidin-4-yl-gruppen, so kann es sich dabei beispielsweise um das unsubstituierte Piperidin-4-yl handeln, oder das Piperidin kann mit bis zu 5 Alkylgruppen, bevorzugt mit Methyl- oder Aethyl-gruppen substituiert sein. Bevorzugte Substitutionsstellen sind die 2- und 6-Position im Piperidinring. Es kann sich ferner auch um 3,3,5-Trimethyl-8-äthoxy-bicyclo[4,4,0]dec-2-yl handeln.

$R_3$ und $R_4$ können daher Piperidin-4-yl-gruppen folgender Konstitution bilden:

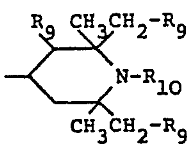

(VIII),

worin $R_9$ Wasserstoff oder Methyl bedeutet, und $R_{10}$ Wasserstoff, Oxyl, $C_1$—$C_8$ Alkyl, $C_3$—$C_8$ Alkenyl, $C_3$—$C_6$ Alkinyl, $C_7$—$C_{12}$ Aralkyl, $C_2$—$C_{21}$ Alkoxyalkyl, eine aliphatische Acylgruppe mit 1—4 C-Atomen oder eine Gruppe —$CH_2COOR_{11}$, wobei $R_{11}$ $C_1$—$C_{12}$ Alkyl, $C_3$—$C_8$ Alkenyl, Phenyl, $C_7$—$C_8$ Aralkyl oder Cyclohexyl bedeutet.

Ganz besonders bevorzugte Piperidin-4-yl-reste sind solche, worin $R_9$ Wasserstoff und $R_{10}$ Wasserstoff, Methyl oder Acetyl bedeutet.

Die bevorzugte Bedeutung von $R_9$ ist Wasserstoff.

$R_{10}$ ist als $C_1$—$C_{18}$ Alkyl z.B. Methyl, Aethyl, n-Propyl, n-Butyl, n-Pentyl, n-Octyl, n-Decyl, n-Dodecyl oder Octadecyl. Bevorzugt sind Alkylgruppen mit 1 bis 12, ferner solche mit 1 bis 8, insbesondere solche mit 1 bis 4 Kohlenstoffatomen und vor allem Methyl.

$R_{10}$ ist als $C_3$—$C_8$ Alkenyl beispielsweise Allyl, 3-Methyl-2-butenyl, 2-Butenyl, 2-Hexenyl oder 2-Octenyl, insbesondere Allyl.

$R_{10}$ ist als $C_3$—$C_6$ Alkinyl z.B. Propargyl.

$R_{10}$ ist als $C_7$—$C_{12}$ Aralkyl z.B. Benzyl, $\beta$-Phenyläthyl oder 4-tert. Butyl-benzyl, bevorzugt Benzyl.

Bedeutet $R_{10}$ $C_2$—$C_{21}$ Alkoxyalkyl, so kann der Alkylteil 1 bis 3 Kohlenstoffatome enthalten und der Alkoxy-Teil aus 1 bis 18 Kohlenstoffatomen bestehen, wie z.B. in Methoxymethyl, Aethoxymethyl, 2-Methoxyäthyl, 2-Aethoxyäthyl, 2-n-Butoxyäthyl, 3-n-Butoxypropyl, 2-Octoxyäthyl oder 2-Octadecyloxyäthyl; insbesondere zu erwähnen sind Verbindungen, in denen $R_{10}$ eine Alkoxyalkylgruppe mit 2 bis 6 Kohlenstoffatomen bedeutet.

$R_{10}$ ist als aliphatische Acylgruppe mit 1 bis 4 Kohlenstoffatomen, beispielsweise Formyl, Acetyl, Acryloyl oder Crotonoyl, insbesondere Acetyl.

Ist $R_{10}$ die Gruppe —$CH_2COOR_{11}$, so bedeutet $R_{11}$ als $C_1$—$C_{12}$ Alkyl, z.B. Methyl, Aethyl, Isopropyl, n-Butyl, Isobutyl, t-Butyl, Isopentyl, N-Octyl oder n-Dodecyl. Bevorzugt ist $R_{11}$ $C_1$—$C_4$ Alkyl. $R_{11}$ ist als $C_3$—$C_8$ Alkenyl z.B. Allyl, 2-Butenyl oder 2-Hexenyl. $R_{11}$ ist als $C_7$—$C_8$ Aralkyl z.B. Benzyl oder $\alpha$-Phenyläthyl.

Bedeutet $R_3$ eine Gruppe der Formel II, so besitzt diese Gruppe bevorzugt die gleiche Substitution wie der bereits im Molekül vorhandene Dibenz[c,e][1,2]oxaphosphorin-6-yl-Rest.

Bilden $R_3$ und $R_4$ mit dem N-Atom an das sie gebunden sind einen Pyrrolidin-, Oxazolidin-, Piperidin- oder Morpholinring, so können diese Heterocyclen mit bis zu fünf Methyl- oder Aethylgruppen substituiert sein. Bevorzugt sind diese Ringsysteme unsubstituiert.

n kann 0 oder bevorzugt 1 sein.

$R_5$ kann als $C_2$—$C_{22}$ Alkylen, bevorzugt $C_2$—$C_9$ und insbesondere $C_2$—$C_6$ Alkylen beispielsweise Dimethylen, Trimethylen, Tetramethylen, Hexamethylen, Octamethylen, Nonamethylen, 2,2,4-Trimethylhexamethylen, Decamethylen, Dodecamethylen, Octadecamethyl oder Docosamethylen sein. Sind die Alkylengruppen gegebenenfalls mit —O— oder —S— unterbrochen, so kann es sich dabei um 2-Thiapropylen-1,3,3-Thia-pentylen-1,5,4-oxaheptamethylen oder 3,6-Dioxaoctylen-1,8 handeln.

Ist $R_5$ $C_4$—$C_{22}$ Alkenylen oder Alkinylen, so handelt es sich dabei beispielsweise um 2-Butenylen-1,4; 2-Butinylen-1,4; 2,4-Hexadiinylen-1, oder um Propenylen-1,3 handeln.

$R_5$ ist als $C_5$—$C_9$ Cycloalkylen beispielsweise 1,2-Cyclopentylen, 1,2-Cyclohexylen, 1,3-Cyclohexylen, 1,4-Cyclohexylen, 1,4-Cycloheptylen oder 1,2-Cyclononylen. Bevorzugt besitzt $R_5$ als Cycloalkylen 6 C-Atome.

$R_7$ und $R_8$ sind als $C_1$—$C_8$ Alkyl z.B. Aethyl, n-Propyl, Isopropyl, n-Butyl, n-Phenyl, n-Hexyl oder n-Octyl, bevorzugt sind $R_7$ und $R_8$ jedoch als Alkylgruppen Methyl.

$R_7$ und $R_8$ können ferner mit dem C-Atom an das sie gebunden sind $C_5$—$C_{12}$ Cycloalkyl, bevorzugt Cyclohexyl bilden. Es kann sich dabei um Cyclopentyl, Cyclohexyl, Cycloheptyl, Cyclooctyl oder Cyclododecyl handeln.

r, t und n sind unabhängig voneinander 2, 3, 4, 5 oder 6, bevorzugt sind sie jedoch gleich und sind insbesondere 2 oder 3.

m kann 0, 1, 2 oder 3 sein. Bevorzugt ist n 0 oder 1 und insbesondere 0.

Kommen in den Verbindungen Reste Q vor, so sind diese bevorzugt gleich substituiert wie die

übrigen im Molekül vorkommenden Dibenz[c,e][1,2]oxaphosphorin-6-yl-Reste.

Bevorzugt werden Verbindungen der Formel I, worin

$R_1$ $C_1$—$C_8$ Alkyl ist, und

x 0, 1 oder 2 und

y 0 ist, und

A eine Gruppe —$N(R_3)R_4$ (III) ist, worin

$R_3$ Wasserstoff, $C_1$—$C_{18}$ Alkyl, $C_3$—$C_4$ Alkenyl, $C_3$—$C_4$ Alkinyl, $C_3$—$C_{24}$ Alkoxycarbonylmethyl oder -äthyl, $C_5$—$C_{12}$ Cycloalkyl, Phenyl, Benzyl, $C_7$—$C_{15}$ Alkaryl, eine unsubstituierte oder substituierte $C_5$—$C_{17}$ Piperidin-4-yl-gruppe oder eine Gruppe der Formel II bedeutet, worin $R_1$, x und y die oben angegebene Bedeutung haben, und

$R_4$ $C_1$—$C_{18}$ Alkyl, $C_3$—$C_4$ Alkenyl, $C_3$—$C_4$ Alkinyl, $C_3$—$C_{24}$ Alkoxycarbonylmethyl oder -äthyl, $C_5$—$C_{12}$ Cycloalkyl, Phenyl, Benzyl, $C_7$—$C_{15}$ Alkaryl, eine unsubstituierte oder substituierte $C_5$—$C_{17}$ Piperidin-4-yl-gruppe, eine Gruppe der Formel IV oder V ist, worin $R_3$ die oben angegebene Bedeutung hat, und

n 0 oder 1 ist, und

$R_5$ gegebenenfalls mit einem oder zwei Sauerstoff- oder Schwefelatomen unterbrochenes $C_2$—$C_9$ Alkylen ist, oder Cyclohexylen, oder eine Gruppe der Formel VI bedeutet, worin

$R_6$ —O—, —S— oder —$(R_7)C(R_8)$— ist, worin

$R_7$ und $R_8$ unabhängig voneinander Wasserstoff oder Methyl sind, oder

$R_7$ und $R_8$ zusammen mit dem C-Atom, an welches sie gebunden sind Cyclohexylen bilden, oder

$R_7$ und $R_8$ zusammen 1,4-Cyclohexylendimethylen oder 1,3,3-Trimethyl-cyclohexylen-1,5 bedeuten, und

r, t und n 2 oder 3 sind, und

m 0 oder 1 ist, und

Q eine Gruppe der Formel II ist, worin $R_1$, x und y die oben angegebene Bedeutung hat, oder

$R_3$ und $R_4$ zusammen mit dem N-Atom an das sie gebunden sind einen Pyrrolidin-, Oxozolidin-, Piperidin- oder Morpholinring bilden, oder

$R_3$ und $R_4$ zusammen den Rest —$CH_2CH_2$—N(Q)—$CH_2CH_2$— bedeuten, worin Q die oben angegebene Bedeutung hat.

Interesse gilt Verbindungen der Formel I, worin

x und y 0 sind, und

A eine Gruppe —$N(R_3)R_4$ (III) ist, worin

$R_3$ Wasserstoff $C_1$—$C_{18}$ Alkyl, Allyl, Propargyl, $C_3$—$C_{14}$ Alkoxycarbonylmethyl, $C_3$—$C_{15}$ Alkoxycarbonyläthyl oder $C_5$—$C_8$ Cycloalkyl bedeutet, und

$R_4$ $C_1$—$C_4$ Alkyl, Allyl, Propargyl, $C_3$—$C_{14}$ Alkoxycarbonylmethyl, $C_3$—$C_{15}$ Alkoxycarbonyläthyl, $C_5$—$C_8$ Cycloalkyl oder eine Gruppe der Formel IV oder V bedeutet, worin $R_3$ die oben angegebene Bedeutung hat, und

n 1 ist, und

$R_5$ $C_2$—$C_6$ Alkylen bedeutet, und

r, t und n 2 oder 3 sind, und

m 0 ist, und

Q eine Gruppe der Formel II ist, worin x und y die oben angegebene Bedeutung haben, oder

$R_3$ und $R_4$ zusammen mit dem N-Atom, an welches sie gebunden sind einen Piperidin- oder Morpholinring bilden, oder

$R_3$ und $R_4$ zusammen den Rest —$CH_2CH_2$—N(Q)—$CH_2CH_2$— bedeuten, worin Q die oben angegebene Bedeutung hat.

Besonders bevorzugt sind Verbindungen der Formel I, worin

x und y 0 sind, und

A eine Gruppe —$N(R_3)R_4$ (III) ist, worin

$R_3$ Wasserstoff, $C_1$—$C_{12}$ Alkyl oder Cyclohexyl ist, und

$R_4$ $C_1$—$C_4$ Alkyl, Cyclohexyl oder eine Gruppe der Formel IV ist, worin $R_3$ die oben angegebene Bedeutung hat, und Q eine Gruppe der Formel II ist, worin x und y die oben angegebene Bedeutung haben, und

N 1 ist, und

$R_5$ $C_2$—$C_6$ Alkylen bedeutet, oder

$R_3$ und $R_4$ zusammen mit dem N-Atom, an welches sie gebunden sind einen Piperidin- oder Morpholinring bilden, oder

$R_3$ und $R_4$ zusammen den Rest —$CH_2CH_2$—N(Q)—$CH_2CH_2$— bedeuten, worin Q die oben angegebene Bedeutung hat.

Beispiele für Verbindungen der Formel I sind:

1) 6-(N,N-Di-n-octylamino)-dibenz[c,e][1,2]oxaphosphorin
2) 6-(2′-Aza-3′,3′,5′-trimethyl-8′-äthoxy-bicyclo[4,4,0]dec-2′-yl)-dibenz[c,e][1,2]oxaphosphorin
3) 6-(N-2′,6′-Dimethylphenyl-N-cyclohexyl-amino)dibenz[c,e][1,2]oxaphosphorin
4) 6-(N-Cyclododecyl-N-t.octyl-amino)-dibenz[c,e][1,2]oxaphosphorin
5) 6-(N-t.Butylamino)-dibenz[c,e][1,2]oxaphosphorin

6) 6-(N-2',6'-Dimethylphenylamino)-dibenz[c,e][1,2]oxaphosphorin
7) 6-(N-Octadecylamino)-dibenz[c,e][1,2]oxaphosphorin
8) 6-(N-Cyclododecylamino)-dibenz[c,e][1,2]oxaphosphorin
9) 6-(N-p-t.Octylphenyl-N-iso-propyl-amino)-dibenz[c,e][1,2]oxaphosphorin
10) 6-(N-Cyclohexyl-N-allyl-amino)-dibenz[c,e][1,2]oxaphosphorin
11) 2,2-Bis-{4'-[N-(dibenz[c,e][1'',2'']oxaphosphorin-6''-yl)]amino-cyclohexyl}-propan
12) N,N'-Bis-(dibenz[c,e][1,2]-2,4-di-t.butyloxaphosphorin-6-yl)-benzidin
13) N,N'-Bis-(dibenz[c,e][1,2]oxaphosphorin-6-yl)-N,N'-dicyclopentyl-hexamethylendiamin
14) N,N'-Bis-(dibenz[c,e][1,2]oxaphosphorin-6-yl)-N,N'-di-isopropyl-hydrazin
15) N,N' - Bis - (dibenz[c,e][1,2]oxaphosphorin - 6 - yl) - N,N' - di - (1' - isopropyl - 2' - methyl - propyl) - äthylendiamin
16) N,N'-Bis-(dibenz[c,e][1',2']oxaphosphorin-6-yl)-4,9-dioxadodecylendiamin
17) N,N'-Bis-(dibenz[c,e][1,2]oxaphosphorin-6-yl)-N,N'-dicycloheptyl-hexamethylendiamin
18) 1,4-Bis-(dibenz[c,e][1',2']oxaphosphorin-6'-yl)-2,5-dimethylpiperazin
19) 1,4-Bis-[N-(dibenz[c,e][1',2']oxaphosphorin-6'-yl)-aminopropyl)-piperazin
20) N,N'-N''-Tris-(dibenz[c,e][1,2]-2-methyl-oxaphosphorin-6-yl)-diäthylentriamin
21) N,N - Bis - [3 - [N' - (dibenz[c,e][1',2']oxaphosphorin - 6' - yl)] - aminopropyl] - N - (dibenz - [c,e][1'',2'']oxaphosphorin - 6'' - yl) - amin
22) N,N-Bis-(dibenz[c,e][1,2]oxaphosphorin-6-yl)-N-n.butylamin
23) N,N'-Bis-(dibenz[c,e][1,2]oxaphosphorin-6-yl)-N,N'-diisopropyl-hydrazin
24) N - Cyclohexyl - N - (dibenz[c,e][1,2] - 2,4 - dichlorooxaphosphorin - 6 - yl] - aminosucein - säure - dioctylester
25) Q—N(Cyclohexyl)—$(CH_2)_3$—N(Q)—$(CH_2)_3$—N(Q)—$(CH_2)_3$—N(Q)—$(CH_2)_3$—N(cyclohexyl)Q
26) Q—N(H)—$[CH_2$—$CH_2$—$N(Q)]_4$—$CH_2$—$CH_2$—N(H)Q.

In den Formeln 25 und 26 bedeutet Q den Rest (Dibenz[c,e][1,2]oxaphosphorin-5-yl):

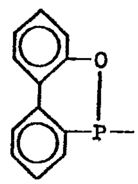

Die Phosphonite der Formel I können nach an sich bekannten Methoden hergestellt werden, insbesondere durch Amidierungs- oder Umamidierungsreaktionen, z.B. dadurch, dass man ein Phosphonit der Formel VI

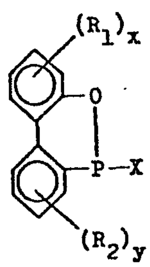

(VI),

worin X eine reaktionsfähige Gruppe ist und $R_1$, $R_2$, x und y die oben angegebene Bedeutung haben, mit einem Amin der Formel VII

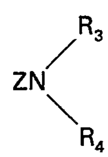

(VII),

worin Z Wasserstoff oder ein Na-, Li- oder K-Atom ist, und $R_3$ und $R_4$ die oben angegebene Bedeutung haben, umsetzt.

Eine reaktionsfähige Gruppe x ist beispielsweise Halogen, insbesondere Chlor, Alkoxy, Phenoxy oder eine primäre oder sekundäre Aminogruppe.

Die Reaktion kann in an sich bekannter Weise erfolgen, z.B. bei −5°C bis 80°C, oder durch Erhitzen, bevorzugt auf über etwa 80°C, z.B. 80—170°C. Die Reaktion kann ohne oder in Gegenwart eines inerten Lösungsmittels, wie aprotische Lösungsmittel, z.B. Ligroin, Toluol, Xylol, Hexan, Cyclohexan, Dimethylformamid, Dimethylacetamid, Sulfolan, Acetonitril, Dioxan, Di-n-butyläther, 1,2-Dichloräthan, Dimethylsulfoxid, Essigsäureester, Methyläthylketon, Nitrobenzol, Nitromethan, Tetrahydrofuran, Chloroform oder Trichloräthylen durchgeführt werden. Bedeutet X Halogen, so erfolgt die Reaktion vorteilhaft in Gegenwart einer Base, wie Natriumcarbonat oder einem Amin, z.B. Triäthylamin, Pyridin oder N,N-Dimethylanilin. Es ist aber durch- aus möglich, mit einem Ueberschuss an Amin der Formel VII zu arbeiten, wobei dieser als Säureakzeptor wirkt. Im Ueberschuss eingesetzte Aminbasen können gleichzeitig als Lösungsmittel dienen.

Die Ausgangsstoffe der Formeln VI und VII sind bekannt, oder können, sofern sie neu sind, in Analogie zu bekannten hergestellt werden. Die Phosphonite der Formel VI sind z.B. in dem GB-Pat. Nr. 1,256,280 beschrieben worden, während die Ausgangsamine der Formel VII seit langem bekannte Verbindungen und vielfach handelsüblich sind.

Die Verbindungen der Formel I können gemäss der vorliegenden Erfindung als Stabilisatoren für Kunststoffe und Elastomere gegen deren Schädigung durch Einwirkung von Sauerstoff, Licht und Wärme verwendet werden. Beispiele für solche Kunststoffe sind die in der DT—OS 2.456.864 auf den Seiten 12—14 aufgeführten Polymeren.

Geeignete Substrate sind z.B.:

1. Polymere, die sich von einfach ungesättigten Kohlenwasserstoffen ableiten, wie Polyolefine, wie z.B. Polyäthylen, niederer und hoher Dichte, das gegebenenfalls vernetzt sein kann, Polypropylen, Polyisobutylen, Polymethylbuten-1, Polymethylpenten-1.

2. Mischungen der unter 1 genannten Homopolymeren, wie z.B. Gemische von Polypropylen und Polyäthylen, Polypropylen und Polybuten-1, Polypropylen und Polyisobutylen.

3. Copolymere der dem unter 1 genannten Homopolymeren zugrundeliegenden Monomeren, wie Aethylen-Propylen-Copolymere, Propylen-Buten-1-Copolymere, Propylen-Isobutylen-Copolymere, Aethylen-Buten-1-Copolymere, sowie Terpolymere von Aethylen und Propylen mit einem Dien, wie z.B. Hexadien, Dicyclopentadien oder Aethylidennorbornen.

4. Polystyrol und seine Copolymeren, wie SAN, ABS, IPS, ASA und EP modifizierte Styrolcopolymerisate.

5. Polyamide.

6. Lineare Polyester.

7. Polyurethane.

8. Polycarbonate.

9. Elastomere, wie Polybutadien, SBR, Polyisopren, Polychloropren und Nitrilkautschuk.

10. Thermoplastiche Elastomere, wie SBS, SIS und S—EP—S.

11. Polyvinylchlorid etc.

12. Schmieröle auf synthetischer und mineralischer Basis.

Ein weiterer Gegenstand vorliegender Erfindung ist ein Verfahren zum Stabilisieren von Polymeren gegen den thermooxidativen Abbau während Herstellung, Isolierung, Verarbeitung und Gebrauch, das dadurch gekennzeichnet ist, dass man dem Polymeren mindestens eine Verbindung der Formel I zusetzt.

Die Verbindungen der Formel I werden den Substraten in einer Konzentration von 0,005 bis 5 Gew.-% berechnet auf das zu stabilizierende Material, einverleibt.

Vorzugsweise werden 0,01 bis 1,0, besonders bevorzugt 0,02 bis 0,5 Gew.-% der Verbindungen, berechnet auf das zu stabilisierende Material, in dieses eingearbeitet. Die Einarbeitung kann beispielsweise durch Einmischen mindestens einer der Verbindungen der Formel I und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels, erfolgen.

Die neuen Verbindungen können auch in Form eines Masterbatches, der diese Verbindungen beispielsweise in einer Konzentration von 2,5 bis 25 Gew.-% enthält, den zu stabilisierenden Kunststoffen zugesetzt werden.

Im Falle von vernetztem Polyäthylen werden die Verbindungen vor der Vernetzung beigefügt.

Die Erfindung betrifft daher auch ein Verfahren zum stabilisieren von Kunststoffen, die gegegebenenfalls noch andere Zusätze enthalten können, durch Zusatz von 0,01 bis 5 Gew.-% einer Verbindung der Formel I. Die so stabilisierten Kunststoffe können in verschiedenster Form angewendet werden, z.B. als Folien, Fasern, Bändchen, Profile oder als Bindemittel für Lacke, Klebemittel oder Kitte.

Als Beispiele weiterer Additive, mit denen zusammen die Stabilisatoren eingesetzt werden können, sind zu nennen: Antioxydantien, UV-Absorber und Lichtschutzmittel, wie 2-(2'-Hydroxyphenyl)-benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls substituierten Benzoesäuren, Acrylate, des weiteren Nickelverbindungen, sterisch gehinderte Amine, Oxalsäurediamide, Metalldesaktivatoren, Phosphite, peroxidzerstörende Verbindungen, Polyamidstabilisatoren, basische Co-Stabilisatoren, Nukleierungsmittel oder sonstige Zusätze wie z.B. Weichmacher, Gleitmittel, Emulgatoren, Füllstoffe, Russ, Asbest, Kaolin, Talk, Glasfasern, Pigmente, optische Aufheller, Flammschutzmittel, Antistatica.

Die Erfindung wird mit den nachfolgenden Beispielen näher erläutert.

Beispiel 1

6-(N,N-Di-cyclohexyl-amino)-dibenz[c,e][1,2]oxaphosphorin

35,1 g (0,15 Mol) 6-Chloro-dibenz[c,e][1,2]oxaphosphorin, 27,1 g (0,15 Mol) Dicyclohexylamin und 50 ml Triäthylamin werden während 10 Stunden bei Rückflusstemperatur gehalten. Die Lösung wird mit Toluol versetzt, das Triäthylaminhydrochlorid durch Filtration entfernt, und das Filtrat am Vakuum eingeengt. Das Kristalline Produkt besitzt einen Schmelzpunkt von 162°C. (Verbindung I).

Beispiel 2

Verfährt man wie in Beispiel 1 beschrieben und verwendet anstelle des Dicyclohexylamins 15,1 g (0,15 Mol) Diisopropylamin so erhält man das 6-(N,N-Di-isopropylamino)-dibenz[c,e][1,2]oxaphosphorin mit einem Schmelzpunkt von 111°C. (Verbindung II).

Beispiel 3

Unter Verwendung eines Mol-Aequivalents Cyclohexylamin und zwei Mol-Aequivalenten 6-Chloro-dibenz[c,e][1,2]oxaphosphorino unter sonst gleichen Bedingungen wie in Beispiel 1 beschrieben, erhält man das N,N-Bis-(dibenz[c,e][1,2]oxaphosphorin-6-yl)-N-cyclohexylamin mit einem Schmelzpunkt von 191°C (Verbindung III).

Folgende Verbindungen werden unter sonst gleichen Bedingungen wie in Beispiel 1 beschrieben hergestellt:

Beispiele 4—12

4. 6-[N(2,6-Di-isopropyl)-anilino]-dibenz[c,e][1,2]oxaphosphorin. Fp. 50°C;
5. N,N'-Bis-(dibenz[c,e][1,2]oxaphosphorin-6-yl)piperazin. Fp. 250°C;
6. N,N'-Bis-(dibenz[c,e][1,2]oxaphosphorin-6-yl)-N-(2-äthyl)-hexylamin. Fp. 125°C;
7. N,N-Bis-(dibenz[c,e][1,2]oxaphosphorin-6-yl)-N-dodecylamin. Viscoses Oel:

| | | | | |
|---|---|---|---|---|
| Ber. | C 74.3; | H 7.2; | N 2.4; | P 10.6 |
| Gef. | C 74.2; | H 7.3; | N 2.3; | P 10.3 |

8. N,N,N',N'-Tetra(dibenz[c,e][1,2]oxaphosphorin-6-yl)N,N'-hexamethylendiamin;
9. 6-[N,N-Di(2,2,6,6-tetramethylpiperidin-4-yl)amino]dibenz[c,e][1,2]oxaphosphorin, Fp. 214°C;
10. 6-[N-Dodecyl-N-(2,2,6,6-tetramethylpiperidin-4-yl)amino]-dibenz[c,e][1,2]oxaphosphorin, Fp. 50°C;
11. N,N-Bis-(dibenz[c,e][1,2]oxaphosphorin-6-yl)amin, Fp. 184—185°C;
12. N,N,N-Tris-(dibenz[c,e][1,2]oxaphosphorin-6-yl)amin, Fp. 260°C.

**Patentansprüche**

1. Verbindungen der Formel I

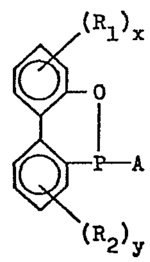

(I),

worin

$R_1$ und $R_2$ unabhängig voneinander unsubstituierte oder substituierte Kohlenwasserstoffreste oder Halogen sind

x und y unabhängig voneinander 0, 1, 2 oder 3 sind, und

A eine durch aliphatische, alicyclische, aromatische oder araliphatische Reste substituierte Aminogruppe, eine heterocyclische Aminogruppe oder ein Hydrazinderivat bedeutet.

2. Verbindungen gemäss Anspruch 1 der Formel I, worin A eine Gruppe $-N(R_3)R_4$ (III) ist, worin

$R_3$ Wasserstoff, $C_1$—$C_{22}$ Alkyl, $C_2$—$C_{21}$ Oxa- oder Thiaalkyl, $C_3$—$C_{18}$ Alkenyl, $C_3$—$C_{18}$ Alkinyl, $C_2$—$C_6$ Hydroxyalkyl, $C_3$—$C_{24}$ Alkoxycarbonylalkyl, $C_5$—$C_{12}$ Cycloalkyl, $C_6$—$C_{14}$ Aryl, $C_7$—$C_{15}$ Alkaryl, $C_7$—$C_{15}$ Aralkyl, eine unsubstituierte oder substituierte $C_5$—$C_{17}$ Piperidin-4-ylgruppe oder eine Gruppe der Formel II

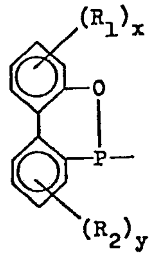

(II)

bedeutet, worin $R_1$, $R_2$, x und y die oben angegebene Bedeutung haben, und

$R_4$ $C_1$—$C_{22}$ Alkyl, $C_2$—$C_{21}$ Oxa- oder Thiaalkyl, $C_3$—$C_{18}$ Alkenyl, $C_3$—$C_{18}$ Alkinyl, $C_2$—$C_6$ Hydroxyalkyl, $C_3$—$C_{24}$ Alkoxycarbonylalkyl, $C_5$—$C_{12}$ Cycloalkyl, $C_6$—$C_{14}$ Aryl, $C_7$—$C_{15}$ Alkaryl, $C_7$—$C_{15}$ Aralkyl, eine unsubstituierte oder substituierte $C_5$—$C_{17}$ Piperidin-4-ylgruppe, eine Gruppe der Formel IV

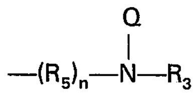

(IV) oder

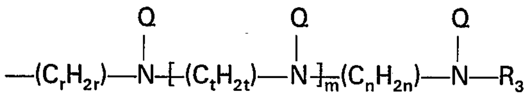

(V),

worin

$R_3$ die oben angegebene Bedeutung hat, und

n 0 oder 1 ist, und

$R_5$ gegebenenfalls mit einem oder zwei Sauerstoff- oder Schwefelatomen unterbrochen, $C_2$—$C_{22}$ Alkylen, $C_4$—$C_{22}$ Alkenylen, $C_4$—$C_{22}$ Alkinylen, $C_5$—$C_9$ Cycloalkylen, oder eine Gruppe der Formel VI

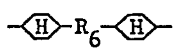

ist, worin $R_6$ —O—, —S— oder —$(R_7)C(R_8)$— ist, wobei $R_7$ und $R_8$ unabhängig voneinander Wasserstoff oder $C_1$—$C_8$ Alkyl sind oder $R_7$ und $R_8$ zusammen mit dem C-Atom, an das sie gebunden sind, $C_5$—$C_{12}$ Cycloalkyl ergeben, oder $R_7$ und $R_8$ bedeuten zusammen 1,4-Cyclohexylendimethylen oder 1,3,3-Trimethyl-cyclohexylen-1,5 und worin $R_5$ ferner Phenylen, Biphenylen oder eine Gruppe der Formel

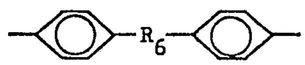

bedeutet, wobei $R_6$ die oben angegebene Bedeutung hat, und r, t und n unabhängig voneinander 2, 3, 4, 5 oder 6 sind, und

m 0, 1, 2 oder 3 ist, und

Q eine Gruppe der Formel II bedeutet, worin $R_1$, $R_2$, x und y die oben angegebene Bedeutung haben, oder

$R_3$ und $R_4$ ferner zusammen mit dem N-Atom, an das sie gebunden sind, substituiertes Pyrrolidin, Oxazolidin, Piperidin oder Morpholin bedeuten, oder $R_3$ und $R_4$ zusammen den Rest —$CH_2$—$CH_2$—N(Q)—$CH_2$—$CH_2$— bilden, worin Q die oben angegebene Bedeutung hat.

3. Verbindungen gemäss Anspruch 1 der Formel I, worin

$R_1$ $C_1$—$C_8$ Alkyl ist, und

x 0, 1 oder 2 und

y 0 ist, und

A eine Gruppe —$N(R_3)R_4$ (III) ist, worin

$R_3$ Wasserstoff, $C_1$—$C_{18}$ Alkyl, $C_3$—$C_4$ Alkenyl, $C_3$—$C_4$ Alkinyl, $C_3$—$C_{24}$ Alkoxycarbonylmethyl oder -äthyl, $C_5$—$C_{12}$ Cycloalkyl, Phenyl, Benzyl, $C_7$—$C_{15}$ Alkaryl, eine unsubstituierte oder substituierte $C_5$—$C_{17}$ Piperidin-4-yl-gruppe oder eine Gruppe der Formel II bedeutet, worin $R_1$, x und y die oben angegebene Bedeutung haben, und

$R_4$ $C_1$—$C_{18}$ Alkyl, $C_3$—$C_4$ Alkenyl, $C_3$—$C_4$ Alkinyl, $C_3$—$C_{24}$ Alkoxycarbonylmethyl oder -äthyl, $C_5$—$C_{12}$ Cycloalkyl, Phenyl, Benzyl, $C_7$—$C_{15}$ Alkaryl, eine unsubstituierte oder substituierte $C_5$—$C_{17}$ Piperidin-4-yl-gruppe, eine Gruppe der Formel IV oder V ist, worin $R_3$ die oben angegebene Bedeutung hat, und

n 0 oder 1 ist, und

$R_5$ gegebenenfalls mit einem oder zwei Sauerstoff- oder Schwefelatomen unterbrochenes $C_2$—$C_9$ Alkylen ist, oder Cyclohexylen, oder eine Gruppe der Formel VI bedeutet, worin

$R_6$ —O—, —S— oder —$(R_7)C(R_8)$— ist, worin

$R_7$ und $R_8$ unabhängig voneinander Wasserstoff oder Methyl sind, oder

$R_7$ und $R_8$ zusammen mit dem C-Atom, an welches sie gebunden sind Cyclohexylen bilden, oder

$R_7$ und $R_8$ zusammen 1,4-Cyclohexylendimethylen oder 1,3,3-Trimethyl-cyclohexylen-1,5 bedeuten, und

r, t und n 2 oder 3 sind, und

m 0 oder 1 ist, und

Q eine Gruppe der Formel II ist, worin $R_1$, x und y die oben angegebene Bedeutung hat, oder

$R_3$ und $R_4$ zusammen mit dem N-Atom an das sie gebunden sind einen Pyrrolidin-, Oxozolidin-, Piperidin- oder Morpholinring bilden, oder

$R_3$ und $R_4$ zusammen den Rest —$CH_2CH_2$—N(Q)—$CH_2CH_2$— bedeuten, worin Q die oben angegebene Bedeutung hat.

4. Verbindungen gemäss Anspruch 1 der Formel I, worin

x und y 0 sind, und

A eine Gruppe —$N(R_3)R_4$ (III) ist, worin

$R_3$ Wasserstoff $C_1$—$C_{18}$ Alkyl, Allyl, Propargyl, $C_3$—$C_{14}$ Alkoxycarbonylmethyl, $C_3$—$C_{15}$ Alkoxycarbonyläthyl oder $C_5$—$C_8$ Cycloalkyl bedeutet, und

$R_4$ $C_1$—$C_4$ Alkyl, Allyl, Propargyl, $C_3$—$C_{14}$ Alkoxycarbonylmethyl, $C_3$—$C_{15}$ Alkoxycarbonyläthyl, $C_5$—$C_8$ Cycloalkyl oder eine Gruppe der Formel IV oder V bedeutet, worin $R_3$ die oben angegebene Bedeutung hat, und

n 1 ist, und

$R_5$ $C_2$—$C_6$ Alkylen bedeutet, und

r, t under n 2 oder 3 sind, und

m 0 ist, und

Q eine Gruppe der Formel II ist, worin x und y die oben angegebene Bedeutung haben, oder

$R_3$ und $R_4$ zusammen mit dem N-Atom, an welches sie gebunden sind einen Piperidin- oder Morpholinring bilden, oder

$R_3$ und $R_4$ zusammen den Rest —$CH_2CH_2$—N(Q)—$CH_2CH_2$— bedeuten, worin Q die oben angegebene Bedeutung hat.

5. Verbindungen gemäss Anspruch 1 der Formel I, worin

x und y 0 sind, und

A eine Gruppe —$N(R_3)R_4$ (III) ist, worin

$R_3$ Wasserstoff, $C_1$—$C_{12}$ Alkyl oder Cyclohexyl ist, und

$R_4$ $C_1$—$C_4$ Alkyl, Cyclohexyl oder eine Gruppe der Formel IV ist, worin $R_3$ die oben angegebene Bedeutung hat, und Q eine Gruppe der Formel II ist, worin x und y die oben angegebene Bedeutung haben, und

n 1 ist, und

$R_5$ $C_2$—$C_6$ Alkylen bedeutet, oder

$R_3$ und $R_4$ zusammen mit dem N-Atom, an welches sie gebunden sind einen Piperidin- oder Morpholinring bilden, oder

$R_3$ und $R_4$ zusammen den Rest —$CH_2CH_2$—N(Q)—$CH_2CH_2$— bedeuten, worin Q die oben angegebene Bedeutung hat.

6. Verbindungen gemäss Anspruch 1 der Formel I, worin A —$N(R_3)R_4$ ist, wobei $R_3$ eine Piperidin-4-yl-gruppe der Formel VIII

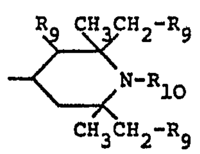

(VIII),

worin $R_9$ Wasserstoff oder Methyl bedeutet, und $R_{10}$ Wasserstoff, Oxyl, $C_1$—$C_8$ Alkyl, $C_3$—$C_8$ Alkenyl, $C_3$—$C_6$ Alkinyl, $C_7$—$C_{12}$ Aralkyl, $C_2$—$C_{21}$ Alkoxyalkyl, eine aliphatische Acylgruppe mit 1—4 C-Atomen oder eine Gruppe —$CH_2COOR_{11}$, wobei $R_{11}$ $C_1$—$C_{12}$ Alkyl, $C_3$—$C_8$ Alkenyl, Phenyl, $C_7$—$C_8$ Aralkyl oder Cyclohexyl bedeutet und $R_4$ die in Anspruch 2 angegebene Bedeutung hat und die übrigen Symbole die in Anspruch 1 angegebene Bedeutung haben.

7. Verbindungen gemäss Anspruch 1 der Formel I, worin A —$N(R_3)R_4$ ist, wobei $R_3$ und $R_4$ je eine Gruppe der Formel VIII bedeuten, worin $R_9$ und $R_{10}$ die im Anspruch 6 angegebene Bedeutung haben und die übrigen Symbole die in Anspruch 1 angegebene Bedeutung haben.

8. Verbindungen gemäss den Ansprüchen 6 und 7, wobei in den Resten der Formel VIII $R_9$ Wasserstoff und $R_{10}$ Wasserstoff, $C_1$—$C_8$ Alkyl, Allyl, Benzyl oder Acetyl ist.

9. Verbindungen gemäss Anspruch 8, worin $R_9$ Wasserstoff und $R_{10}$ Wasserstoff, Methyl oder Acetyl ist.

10. 6-(N,N-Di-isopropyl-amino)-dibenz[c,e][1,2]oxaphosphorin gemäss Anspruch 1.

11. Verwendung von Verbindungen gemäss Anspruch 1 der Formel I zum Stabilisieren von organischem Material.

12. Verwendung gemäss Anspruch 11, dadurch gekennzeichnet, dass das zu stabilisierende organische Material Polyolefin ist.

13. Verfahren zum Herstellen von Verbindungen der Formel I gemäss Anspruch 1, dadurch gekennzeichnet, dass man ein Phosphonit der Formel VI

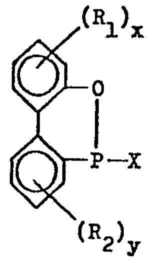

(VI),

worin X eine reaktionsfähige Gruppe ist und $R_1$, $R_2$, x und y die im Anspruch angegebene Bedeutung haben mit einem Amin der Formel VII

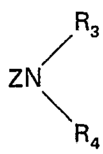

(VII),

worin Z Wasserstoff oder ein Na-, Li- oder K-Atom ist, und $R_3$ und $R_4$ die im Anspruch 1 angegebene Bedeutung haben, umsetzt.

**Revendications**

1. Composés répondant à la formule I

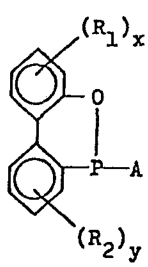

(I),

dans laquelle

$R_1$ et $R_2$ représentent chacun, indépendamment l'un de l'autre, un radical hydrocarboné substitué ou non ou un halogène,

x et y représentent chacun, indépendamment l'un de l'autre, 0, 1, 2 ou 3 et

A représente un groupe amino porteur de radicaux aliphatiques, alicycliques, aromatiques ou araliphatiques, un groupe amino hétérocyclique ou un groupe dérivant de l'hydrazine.

2. Composés de formule I selon la revendication 1 dans lesquels:

A représente un radical —$N(R_3)R_4$ (III) dans lequel

$R_3$ représente l'hydrogène, un alkyle en $C_1$—$C_{22}$, un oxa- ou thia-alkyle en $C_2$—$C_{21}$, un alcényle en $C_3$—$C_{18}$, un alcynyle en $C_3$—$C_{18}$, un hydroxy alkyle en $C_2$—$C_6$, un alcoxycarbonyl-alkyle à alcoxy en $C_3$—$C_{24}$, un cycloalkyle en $C_5$—$C_{12}$, un aryle en $C_6$—$C_{14}$, un alkylaryle en $C_7$—$C_{15}$, un aralkyle en $C_7$—$C_{15}$, un radical pipéridyle-4 substitué ou non et contenant de 5 à 17 atomes de carbone, ou un radical répondant à la formule (II)

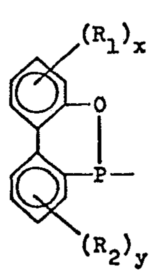

(II)

dans laquelle

$R_1$, $R_2$, x et y ont les significations précédemment données

$R_4$ représente un alkyle en $C_1$—$C_{22}$, un oxa- ou thia-alkyle en $C_2$—$C_{21}$, un alcényle en $C_3$—$C_{18}$, un alcynyle en $C_3$—$C_{18}$, un hydroxyalkyle en $C_2$—$C_6$, un alcoxycarbonylalkyle contenant de 3 à 24 atomes de carbone dans sa partie alcoxy, un cycloalkyle en $C_5$—$C_{12}$, un aryle en $C_6$—$C_{14}$, un alkylaryle en $C_7$—$C_{15}$, un aralkyle en $C_7$—$C_{15}$, un radical pipéridyle-4 substitué ou non et contenant de 5 à 17 atomes de carbone, un radical répondant à l'une des formules (IV) et (V)

$$-(R_5)_n-\overset{\overset{\displaystyle Q}{|}}{N}-R_3 \qquad (IV)$$

$$-(C_rH_{2r})-\overset{\overset{\displaystyle Q}{|}}{N}-\!\!\left[-(C_tH_{2t})-\overset{\overset{\displaystyle Q}{|}}{N}-\right]_m\!(C_nH_{2n})-\overset{\overset{\displaystyle Q}{|}}{N}-R_3 \qquad (V),$$

dans lesquelles

$R_3$ a la signification précédemment donnée,

n est égal à 0 ou à 1,

$R_5$ représente un alkylène en $C_2$—$C_{22}$ éventuellement interrompu par un ou deux atomes d'oxygène ou de soufre, un alcénylène en $C_4$—$C_{22}$, un alcynylène en $C_4$—$C_{22}$, un cycloalkylène en $C_5$—$C_9$, un radical (VI):

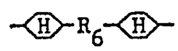

dans lequel $R_6$ représente —O—, —S— ou un radical —$(R_7)C(R_8)$— dans lequel $R_7$ et $R_8$ représentent chacun, indépendamment l'un de l'autre, l'hydrogène ou un alkyle en $C_1$—$C_8$ ou forment ensemble, avec l'atome de carbone auquel ils sont liés, un cycloalkyle en $C_5$—$C_{12}$, ou encore $R_7$ et $R_8$ représentent ensemble un radical cyclohexylène-1,4-diméthylène ou triméthyl-1,3,3 cyclohexylène-1,5, $R_5$ représente également un phénylène, un biphénylylène ou un radical

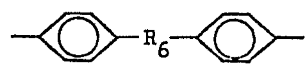

dans lequel $R_6$ a la signification indiquée ci-dessus,

r, t et n représentent chacun, indépendamment les uns des autres, 2, 3, 4, 5 ou 6,

m est égal à 0, à 1, à 2 ou à 3 et

Q représente un radical de formule II dans lequel $R_1$, $R_2$, x et y ont les significations indiquées plus haut, ou

$R_3$ et $R_4$ peuvent en outre représenter ensemble, avec l'atome d'azote auquel ils sont liés, un radical de pyrrolidine, d'oxazolidine, de pipéridine ou de morpholine, éventuellement substitué, ou ou peuvent former ensemble un radical —$CH_2$—$CH_2$—N(Q)—$CH_2$—$CH_2$— dans lequel Q a la signification précédemment donnée.

3. Composés de formule I selon la revendication 1 dans lequels:

$R_1$ représente un alkyle en $C_1$—$C_8$,

x est égal à 0, à 1 ou à 2,

y est égal à 0,

A représente un radical —$N(R_3)R_4$ (III) dans lequel

$R_3$ représente l'hydrogène, un alkyle en $C_1$—$C_{18}$, un alcényle en $C_3$ ou $C_4$, un alcynyle en $C_3$ ou $C_4$, un alcoxycarbonyl- méthyle ou -éthyle dont la partie alcoxy contient de 3 à 24 atomes de carbone, un cycloalkyle en $C_5$—$C_{12}$, un phényle, un benzyle, un alkylaryle en $C_7$—$C_{15}$, un radical pipéridyle-4 éventuellement substitué et contenant de 5 à 17 atomes de carbone, ou un radical de formule II dans lequel $R_1$, x et y ont les significations indiquées plus haut,

$R_4$ représente un alkyle en $C_1$—$C_{18}$, un alcényle en $C_3$ ou $C_4$, un alcynyle en $C_3$ ou $C_4$, un alcoxycarbonyl-méthyle ou -éthyle dont la partie alcoxy contient de 3 à 24 atomes de carbone, un cycloalkyle en $C_5$—$C_{12}$, un phényle, un benzyle, un alkylaryle en $C_7$—$C_{15}$, un radical pipéridyle-4 éventuellement substitué et contenant de 5 à 17 atomes de carbone, ou un radical répondant à l'une des formules IV et V dans lesquelles $R_3$ a la signification indiquée plus haut,

n est égal à 0 ou à 1,

$R_5$ représente un alkylène en $C_2$—$C_9$ éventuellement interrompu par un ou deux atomes d'oxygène ou de soufre, ou représente un cyclohexylène ou un radical de formule VI dans lequel:

$R_6$ représente —O—, —S— ou un radical —$(R_7)C(R_8)$— dans lequel:

$R_7$ et $R_8$ représentent chacun, indépendamment l'un de l'autre, l'hydrogène ou un méthyle, ou $R_7$ et $R_8$ forment ensemble et avec l'atome de carbone qui les porte un radical cyclohexylène, ou

$R_7$ et $R_8$ forment ensemble un radical cyclohexylène-1,4 diméthylène ou triméthyl-1,3,3 cyclohexylène-1,5,

r, t et n sont égaux chacun à 2 ou à 3,

m est égal à zéro ou à 1,

Q représente un radical de formule II dans lequel $R_1$, x et y ont les significations précédemment données, ou encore:

$R_3$ et $R_4$ forment ensemble et avec l'atome d'azote auquel ils sont liés un noyau de pyrrolidine, d'oxazolidine, de pipéridine ou de morpholine, ou

$R_3$ et $R_4$ forment ensemble un radical $—CH_2CH_2—N(Q)—CH_1CH_2—$ dans lequel Q a la signification indiquée plus haut.

4. Composés de formule I selon la revendication 1 dans lesquels:

x et y sont égaux chacun à 0,

A représente un radical $—N(R_3)R_4$ (III) dans lequel:

$R_3$ représente l'hydrogène, un alkyle en $C_1—C_{18}$, un allyle, un propargyle, un alcoxycarbonylméthyle dont la partie alcoxy contient de 3 à 14 atomes de carbone, un alcoxycarbonyléthyle dont la partie alcoxy contient de 3 à 15 atomes de carbone ou un cycloalkyle en $C_5—C_8$, et

$R_4$ représente un alkyle en $C_1—C_4$, un allyle, un propargyle, un alcoxycarbonyl-méthyle dont la partie alcoxy contient de 3 à 14 atomes de carbone, un alcoxycarbonyléthyle dont la partie alcoxy contient de 3 à 15 atomes de carbone, un cycloalkyle en $C_5—C_8$ ou un radical répondant à l'une des formules IV et V dans lesquelles $R_3$ a la signification précédemment donnée,

n est égal à 1,

$R_5$ représente un alkylène en $C_2—C_6$,

r, t et n sont égaux chacun à 2 ou à 3,

m est égal à 0 et

Q représente un radical de formule II dans lequel

x et y ont les significations précédemment données, ou

$R_3$ et $R_4$ forment ensemble et avec l'atome d'azote auquel ils sont liés un noyau de pipéridine ou de morpholine ou

$R_3$ et $R_4$ forment ensemble un radical $—CH_2CH_2—N(Q)—CH_2CH_2—$ dans lequel Q a la signification indiquées plus haut.

5. Composés de formule I selon la revendication 1 dans lesquels:

x et y sont égaux chacun à 0,

A représente un radical $—N(R_3)R_4$ (III) dans lequel:

$R_3$ représente l'hydrogène, un alkyle en $C_1—C_{12}$ ou un cyclohexyle, et

$R_4$ représente un alkyle en $C_1—C_4$, un cyclohexyle ou un radical de formule IV dans lequel $R_3$ a la signification précédemment donnée, Q représente un radical de formule II dans lequel x et y ont les significations indiquées ci-dessus, n est égal à 1 et $R_5$ représente un alkylène en $C_2—C_6$, ou

$R_3$ et $R_4$ forment ensemble et avec l'atome d'azote auquel ils sont liés un noyau de pipéridine ou de morpholine, ou

$R_3$ et $R_4$ forment ensemble un radical $—CH_2CH_2—N(Q)—CH_2CH_2—$ dans lequel Q a la signification précédemment donnée.

6. Composés de formule I selon la revendication 1, dans lesquels A représente un radical $—N(R_3)R_4$ dans lequel $R_3$ représente un radical pipéridyle-4 répondant à la formule VIII

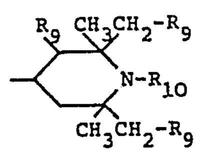

(VIII),

dans laquelle $R_9$ représente l'hydrogène ou un méthyle et $R_{10}$ représente l'hydrogène, un oxyle, un alkyle en $C_1—C_8$, un alcényle en $C_3—C_8$, un alcynyle en $C_3—C_6$, un aralkyle en $C_7—C_{12}$, un alcoxyalkyle en $C_2—C_{21}$, un acyle aliphatique contenant de 1 à 4 atomes de carbone ou un radical $—CH_2COOR_{11}$ dans lequel $R_{11}$ représente un alkyle en $C_1—C_{12}$, un alcényle en $C_3—C_8$, un phényle, un aralkyle en $C_7$ ou $C_8$ ou un cyclohexyle, et $R_4$ a la signification donnée à la revendication 2, les autres symboles ayant les significations données à la revendication 1.

7. Composés de formule I selon la revendication 1, dans lesquels A représente un radical $—N(R_3)R_4$ dont les symboles $R_3$ et $R_4$ représentent chacun un radical de formule VIII dans lequel $R_9$ et $R_{10}$ ont les significations données à la revendication 6, les autres symboles ayant les significations données à la revendication 1.

8. Composés selon l'une des revendications 6 et 7, composés pour lesquels, dans la formule VIII, $R_9$ représentent l'hydrogène et $R_{10}$ l'hydrogène, un alkyle en $C_1—C_8$, un allyle, un benzyle ou un acétyle.

9. Composés selon la revendication 8 dans lesquels $R_9$ représentent l'hydrogène et $R_{10}$ l'hydrogène, un méthyle ou un acétyle.

10. Composé selon la revendication 1, en l'espèce le (N,N-di-isopropylamino)-6 dibenzo[c.3][1,2]oxaphosphorinne.

11. Application de composés de formule I selon la revendication 1 à la stabilisation de matières organiques.

12. Application selon la revendication 11, caractérisée en ce que la matière organique à stabiliser est une polyoléfine.

13. Procédé de préparation de composés de formule I selon la revendication 1, procédé caractérisé en ce qu'on fait réagir un phosphonite répondant à la formule VI

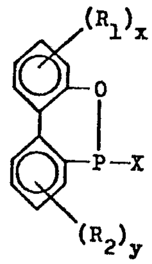

(VI),

dans laquelle X représente un radical réactif et $R_1$, $R_2$, x et y ont les significations données à la revendication 1, avec une amine répondant à la formule VII

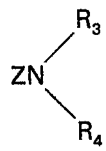

(VII)

dans laquelle Z représente l'hydrogène ou un atome de sodium, de lithium ou de potassium, et $R_3$ et $R_4$ ont les significations données à la revendication 1.

**Claims**

1. A compound of the formula I

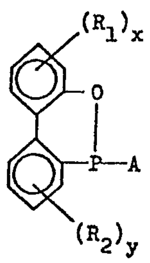

(I)

wherein

$R_1$ and $R_2$ independently of one another are substituted or unsubstituted hydrocarbon radicals, or halogen,

x and y independently of one another are 0, 1, 2 or 3, and

A is an amino group substituted by aliphatic, alicyclic, aromatic or araliphatic radicals, or it is a heterocyclic amino group or a hydrazine derivative.

2. A compound according to Claim 1 of the formula I wherein A is a group $-N(R_3)R_4$ (III), in which

$R_3$ is hydrogen, $C_1$—$C_{22}$ alkyl, $C_2$—$C_{21}$ oxa- or thiaalkyl, $C_3$—$C_{18}$ alkenyl, $C_3$—$C_{18}$ alkynyl, $C_2$—$C_6$ hydroxyalkyl, $C_3$—$C_{24}$ alkoxycarbonylalkyl, $C_5$—$C_{12}$ cycloalkyl, $C_6$—$C_{14}$ aryl, $C_7$—$C_{15}$ alkaryl, $C_7$—$C_{15}$ aralkyl, a substituted or unsubstituted $C_5$—$C_{17}$ piperidin-4-yl group or a group of the formula II

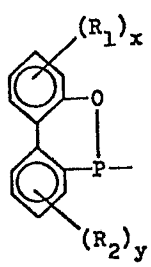

(II)

wherein

$R_1$, $R_2$, x and y have the meanings given above,

$R_4$ is $C_1$—$C_{22}$ alkyl, $C_2$—$C_{21}$ oxa- or thiaalkyl, $C_3$—$C_{18}$ alkenyl, $C_3$—$C_{18}$ alkynyl, $C_2$—$C_6$ hydroxyalkyl, $C_3$—$C_{24}$ alkoxycarbonylalkyl, $C_5$—$C_{12}$ cycloalkyl, $C_6$—$C_{14}$ aryl, $C_7$—$C_{15}$ alkylaryl, $C_7$—$C_{15}$ aralkyl, a substituted or unsubstituted $C_5$—$C_{17}$ piperidin-4-yl group a group of the formula IV

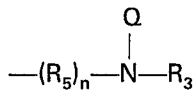

(IV) or

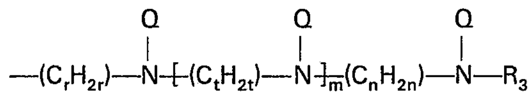

(V)

wherein

$R_3$ has the meaning given above,

n is 0 or 1,

$R_5$ is $C_2$—$C_{22}$ alkylene, $C_4$—$C_{22}$ alkenylene, $C_4$—$C_{22}$ alkynylene, $C_5$—$C_9$ cycloalkylene, each of which can be interrupted with one or two oxygen or sulfur atoms, or $R_5$ is a group of the formula VI

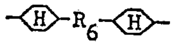

in which $R_6$ is —O—, —S— or —$(R_7)C(R_8)$—, wherein $R_7$ and $R_8$ independently of one another are hydrogen or $C_1$—$C_8$ alkyl, or $R_7$ and $R_8$ together with the C atom to which they are attached form $C_5$—$C_{12}$ cycloalkyl, or $R_7$ and $R_8$ together are 1,4-cyclohexylenedimethylene or 1,3,3-trimethyl-cyclohexylene-1,5, or $R_5$ is also phenylene, biphenylene or a group of the formula

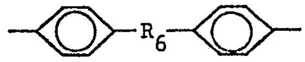

wherein

$R_6$ has the meaning given above, and

r, t and n independently of one another are 2, 3, 4, 5 or 6,

m is 0, 1, 2 or 3,

Q is a group of the formula II, wherein $R_1$, $R_2$, x and y have the meanings given above, or

$R_3$ and $R_4$ together with the N atom to which they are attached are also substituted pyrrolidine, oxazolidine, piperidine or morpholine, or $R_3$ and $R_4$ together form the radical —$CH_2$—$CH_2$—N(Q)—$CH_2$—$CH_2$— wherein Q has the meaning given above.

3. A compound according to Claim 1 of the formula I wherein

$R_1$ $C_1$—$C_8$ alkyl,

x is 0, 1 or 2,

y is 0,

A is a group —$N(R_3)R_4$ (III), wherein

$R_3$ is hydrogen, $C_1$—$C_{18}$ alkyl, $C_3$—$C_4$ alkenyl, $C_3$—$C_4$ alkynyl, $C_3$—$C_{24}$ alkoxycarbonylmethyl or -ethyl, $C_5$—$C_{12}$ cycloalkyl, phenyl, benzyl, $C_7$—$C_{15}$ alkaryl, a substituted or unsubstituted $C_5$—$C_{17}$ piperidin-4-yl group, or a group of the formula II, wherein $R_1$, x and y have the meanings given above,

$R_4$ is $C_1$—$C_{18}$ alkyl, $C_3$—$C_4$ alkenyl, $C_3$—$C_4$ alkynyl, $C_3$—$C_{24}$ alkoxycarbonylmethyl or -ethyl, $C_5$—$C_{12}$ cycloalkyl, phenyl, benzyl, $C_7$—$C_{15}$ alkaryl, a substituted or unsubstituted $C_5$—$C_{17}$ piperidin-4-yl group, a group of the formula IV or V, wherein $R_3$ has the meaning given above,

n is 0 or 1,

$R_5$ is $C_2$—$C_9$ alkylene which can be interrupted with one or two oxygen or sulfur atoms, or it is cyclohexylene, or a group of the formula VI, wherein

$R_6$ is —O—, —S— or —$(R_7)C(R_8)$—, wherein

$R_7$ and $R_8$ independently of one another are hydrogen or methyl, or

$R_7$ and $R_8$ together with the C atom to which they are attached form cyclohexylene, or

$R_7$ and $R_8$ together are 1,4-cyclohexylenedimethylene or 1,3,3-trimethyl-cyclohexylene-1,5,

r, t and n are 2 or 3,

m is 0 or 1,

Q is a group of the formula II, wherein $R_1$, x and y have the meanings given above, or

$R_3$ and $R_4$ together with the N atom to which they are attached form a pyrrolidine, oxozolidine, piperidine or morpholine ring, or

$R_3$ and $R_4$ together are the radical —$CH_2CH_2$—N(Q)—$CH_2CH_2$—, wherein Q has the meaning given above.

4. A compound according to Claim 1 of the formula I wherein

x and y are 0,

A is a group —$N(R_3)R_4$ (III), wherein

$R_3$ is hydrogen, $C_1$—$C_{18}$ alkyl, allyl, propargyl, $C_3$—$C_{14}$ alkoxycarbonylmethyl, $C_3$—$C_{15}$ alkoxycarbonylethyl or $C_5$—$C_8$ cycloalkyl,

$R_4$ is $C_1$—$C_4$ alkyl, allyl, propargyl, $C_3$—$C_{14}$ alkoxycarbonylmethyl, $C_3$—$C_{15}$ alkoxycarbonylethyl, $C_5$—$C_8$ cycloalkyl, or a group of the formula IV or V, wherein $R_3$ has the meaning given above,

n is 1,

$R_5$ is $C_2$—$C_6$ alkylene,

r, t and n are 2 or 3,

m is 0,

Q is a group of the formula II, wherein x and y have the meanings given above, or

$R_3$ and $R_4$ together with the N atom to which they are attached form a piperidine or morpholine ring, or

$R_3$ and $R_4$ together are the radical —$CH_2CH_2$—N(Q)—$CH_2CH_2$— wherein Q has the meaning given above.

5. A compound according to Claim 1 of the formula I wherein

x and y are 0,

A is a group —$N(R_3)R_4$ (III), wherein

$R_3$ is hydrogen, $C_1$—$C_{12}$ alkyl or cyclohexyl,

$R_4$ is $C_1$—$C_4$ alkyl, cyclohexyl, or a group of the formula IV, wherein $R_3$ has the meaning given above, and Q is a group of the formula II, wherein x and y have the meanings given above,

n is 1,

$R_5$ is $C_2$—$C_6$ alkylene,

$R_3$ and $R_4$ together with the N atom to which they are attached form a piperidine or morpholine ring, or

$R_3$ and $R_4$ together are the radical —$CH_2CH_2$—N(Q)—$CH_2CH_2$— wherein Q has the meaning given above.

6. A compound according to Claim 1 of the formula I wherein A is —$N(R_3)R_4$, in which $R_3$ is a piperidin-4-yl group of the formula VIII

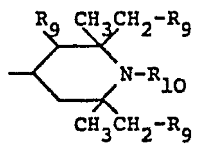

(VIII)

wherein

$R_9$ is hydrogen or methyl, and $R_{10}$ is hydrogen oxyl, $C_1$—$C_8$ alkyl, $C_3$—$C_8$ alkenyl, $C_3$—$C_6$ alkynyl, $C_7$—$C_{12}$ aralkyl, $C_2$—$C_{21}$ alkoxyalkyl, an aliphatic acyl group having 1—4 C atoms, or a group —$CH_2COOR_{11}$, where $R_{11}$ is $C_1$—$C_{12}$ alkyl, $C_3$—$C_8$ alkenyl, phenyl, $C_7$—$C_8$ aralkyl or cyclohexyl, and $R_4$ has the meanings given in Claim 2, and the remaining symbols have the meanings given in Claim 1.

7. A compound according to Claim 1 of the formula I wherein A is —$N(R_3)R_4$, in which $R_3$ and $R_4$ are each a group of the formula VIII, wherein $R_9$ and $R_{10}$ have the meanings given in Claim 6, and the remaining symbols have the meanings given in Claim 1.

8. A compound according to Claims 6 and 7, wherein in the radicals of the formula VIII $R_9$ is hydrogen, and $R_{10}$ is hydrogen, $C_1$—$C_8$ alkyl, allyl, benzyl or acetyl.

9. A compound according to Claim 8, wherein $R_9$ is hydrogen, and $R_{10}$ is hydrogen, methyl or acetyl.

10. 6-(N,N-Di-isopropyl-amino)-dibenz[c,e][1,2]oxaphosphorine according to Claim 1.

11. Use of a compound according to Claim 1 of the formula I for stabilising organic material.

12. Use according to Claim 11, whereby the organic material to be stabilised is polyolefin.

13. A process for producing compounds of the formula I according to Claim 1, which process comprises reacting a phosphonite of the formula VI

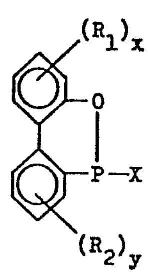

(VI)

wherein

X is a reactive group, and $R_1$, $R_2$, x and y have the meanings given in Claim 1, with an amine of the formula VII

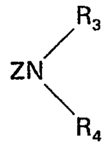

(VII)

wherein

Z is hydrogen or an Na, Li or K atom, and $R_3$ and $R_4$ have the meanings given in Claim 1.